# EUROPEAN PATENT SPECIFICATION

(11) **EP 4 475 280 B1**
(45) Date of publication and mention of the grant of the patent: **25.11.2026**
(21) Application number: 23907275.4
(22) Date of filing: 14.08.2023
(51) Int. Cl.: H01M 10/6551, H01M 10/613, H01M 50/204, H01M 50/249, H01M 50/367, H01M 10/625, H01M 10/6554

(54) **BATTERY PACK AND VEHICLE INCLUDING THE SAME**
BATTERIEPACK UND FAHRZEUG DAMIT
BLOC-BATTERIE ET VÉHICULE LE COMPRENANT

(30) Priority: 23.12.2022 KR 20220183585; 29.03.2023 KR 20230041543
(43) Date of publication of application: 11.12.2024
(73) Proprietor: LG Energy Solution, Ltd., Seoul 07335 (KR)
(72) Inventor: JANG, Sung-Hwan, Daejeon 34122 (KR); JUNG, Hye-Mi, Daejeon 34122 (KR); SEONG, Jun-Yeob, Daejeon 34122 (KR)
(74) Representative: Plasseraud IP
(86) International application number: PCT/KR2023/012058
(87) International publication number: WO 2024/135985

(56) References cited:
- EP-A1- 3 273 527
- JP-A- 2016 177 935
- JP-A- 2022 089 337
- JP-B2- 5 978 847
- JP-B2- 5 978 847
- KR-A- 20200 139 202
- KR-B1- 102 394 801

## Description

### TECHNICAL FIELD

The present disclosure relates to a battery pack and a vehicle including the same, and more specifically, to a battery pack having a plurality of battery cells that can be charged and discharged, and a vehicle including such a battery pack.

### BACKGROUND ART

JP 5 978847 B2 discloses a battery pack which can efficiently adjust temperature of a secondary battery while partitioning a flow path by using a case in which the secondary battery is accommodated.

In general, a secondary battery refers to a battery that can be repeatedly charged and discharged, such as a lithium-ion battery, a lithium polymer battery, a nickel cadmium battery, a nickel hydrogen battery, a nickel zinc battery, and the like. A battery cell, which is the most basic secondary battery, may provide an output voltage of approximately 2.5 V to 4.2 V.

Recently, as this secondary battery has been applied to devices that require high output voltage and large charging capacity, such as an electric vehicle or an energy storage system (ESS), a battery module configured by connecting a plurality of battery cells in series, parallel, or a combination of series and parallel, and a battery pack configured by connecting the battery modules in series, parallel, or a combination of series and parallel are widely used.

As such, since the battery cells or battery modules included inside the battery pack are densely placed in a narrow space to increase energy density, they should be properly managed to avoid overheating or thermal runaway.

However, in manufacturing a battery pack, the existing technology accommodates multiple battery cells or multiple battery modules in a box-shaped pack tray provided with an opening at the top, and closes the opening of the pack tray with a lid having a simple plate structure, so that heat generated inside the battery pack accumulates inside the battery pack, resulting in a problem of causing overheating or thermal runaway of the battery cells or battery modules.

In addition, in this existing technology, the lid of the battery pack is directly exposed to high-temperature gases and flames generated during thermal runaway of the battery cells or battery modules accommodated in the battery pack, so that heat transfer is in a rapid progress due to heat accumulated in the exposed lid portion, resulting in causing chain thermal runaway of other battery cells or other battery modules, and further causing ignition or explosion of the battery pack.

### DISCLOSURE

### Technical Problem

The present disclosure is designed to solve the problems of the related art, and therefore the present disclosure is directed to providing a battery pack that prevents overheating or thermal runaway of the batteries accommodated in the battery pack and suppresses or delays chain thermal runaway between batteries or ignition of the battery pack, and a vehicle including the same.

### Technical Solution

A battery pack according to the features of claim 1.

In an embodiment, the heat dissipation structure may include the first contact portion and the second contact portion in plurality, respectively.

In an embodiment, the plurality of first contact portions of the heat dissipation structure may be spaced apart from each other at intervals and each one may be configured to be in thermal contact with at least one of the plurality of batteries.

In an embodiment, the plurality of second contact portions of the heat dissipation structure may be spaced apart from each other at intervals and each one may be configured to be in thermal contact with different portions of the pack lid.

In an embodiment, the plurality of first contact portions of the heat dissipation structure may be disposed in a lattice shape at intervals from each other on a first plane, and the plurality of second contact portions of the heat dissipation structure may be disposed in a lattice shape at intervals from each other on a second plane parallel to the first plane.

In an embodiment, the plurality of first contact portions and the plurality of second contact portions may be disposed alternately based on a first direction parallel to the first plane or the second plane.

In an embodiment, the heat dissipation structure may include a plurality of connection legs that integrally connect the plurality of first contact portions and the plurality of second contact portions.

In an embodiment, each of the plurality of batteries may have a contact surface contacting at least one of the plurality of first contact portions of the heat dissipation structure, and a venting portion for discharging gas may be provided on a part of the contact surface other than the part in contact with the at least one first contact portion.

In an embodiment, each of the plurality of batteries may include a plurality of battery cells that can be charged and discharged; and a battery case having the contact surface provided with the venting portion and accommodating the plurality of battery cells therein.

In an embodiment, the heat dissipation structure may be made of a material having higher thermal conductivity than that of the pack lid.

In an embodiment, the pack tray may include a wall forming the internal space, wherein the wall may include at least one gas inlet communicating with the space between the first contact portion and the second contact portion and configured such that gas generated from a battery accommodated in the internal space is introduced; and at least one gas passage communicating with the at least one gas inlet.

A vehicle according to another aspect of the present disclosure includes a battery pack according to any one of the above-described embodiments.

### Advantageous Effects

According to the present disclosure, a heat dissipation structure is located between a plurality of batteries accommodated in a pack tray and a pack lid to dissipate heat generated from the plurality of batteries, thereby preventing overheating or thermal runaway of the batteries accommodated in the battery pack, suppressing or delaying chain thermal runaway between the batteries or ignition of the battery pack, and improving safety of the battery pack.

In addition, the heat dissipation structure includes a first contact portion that is in contact with at least one of the plurality of batteries and a second contact portion that is spaced apart from the first contact portion at a predetermined distance and is in contact with the pack lid, which has a relatively larger surface area than a simple plate structure, thereby increasing the cooling speed of the battery and improving the heat dissipation efficiency.

In addition, since the heat dissipation structure is configured as a geometric three-dimensional structure that provides a gas emission space between the battery and the pack lid, it is possible to facilitate the design of an emission path for gas or flame generated from the battery.

Furthermore, those skilled in the art to which the present disclosure belongs will easily understand from the following description that various embodiments according to the present disclosure may solve several technical problems not mentioned above.

### DESCRIPTION OF DRAWINGS

FIG. 1 is an exploded perspective view showing a battery pack according to an embodiment of the present disclosure.
FIG. 2 is a view showing the heat dissipation structure of the battery pack shown in FIG. 1.
FIG. 3 is a cross-sectional view of the heat dissipation structure shown in FIG. 2.
FIG. 4 is a view showing a heat dissipation structure of the battery pack shown in FIG. 1.
FIG. 5 is a cross-sectional view taken along line S1-S1' in FIG. 1.
FIG. 6 is a view showing a battery included in a battery pack according to an embodiment of the present disclosure.
FIG. 7 is an enlarged view showing region A1 in FIG. 6.
FIG. 8 is a cross-sectional view taken along line S2-S2' in FIG. 7.
FIG. 9 is a view showing an open state of the venting portion shown in FIG. 8.
FIG. 10 is a view showing a vehicle according to an embodiment of the present disclosure.

### BEST MODE

Hereinafter, embodiments according to the present disclosure will be described in detail with reference to the accompanying drawings in order to clarify solutions corresponding to the technical problems of the present disclosure. However, if the description of related known technology rather obscures the gist of the present disclosure in describing the present disclosure, the description thereof may be omitted. In addition, the terms used in this specification are terms defined in consideration of functions in the present disclosure, which may vary depending on the intention or custom of the designer, manufacturer, and the like. Therefore, definitions of terms to be described below should be made based on the content throughout this specification.

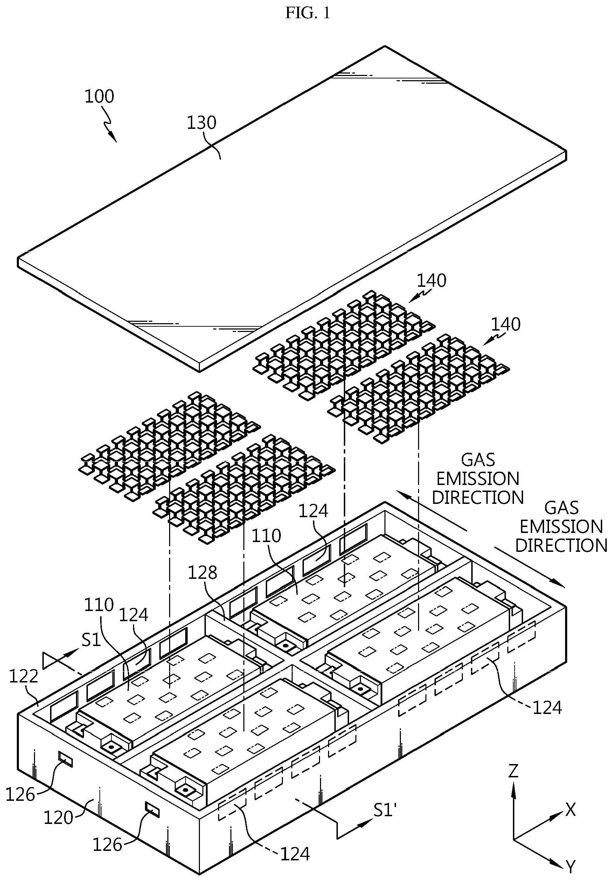

In FIG. 1, a battery pack 100 according to an embodiment of the present disclosure is shown in an exploded perspective view.

As shown in FIG. 1, the battery pack 100 according to an embodiment of the present disclosure includes a battery 110, a pack tray 120, a pack lid 130, and a heat dissipation structure 140.

The battery 110 may be configured as a battery module. As will be described again below, when the battery 110 is implemented as a battery module, the battery 110 may include a plurality of battery cells that are the basic unit of charge/discharge and a battery case that accommodates the plurality of battery cells.

In an embodiment, the battery 110 may also be implemented as a pouch-type, cylindrical, or prismatic battery cell. In this case, the battery 110 may be manufactured by accommodating an electrode assembly in which a positive electrode and a negative electrode are stacked with a separator interposed therebetween, and an electrolyte material, in a pouch-type, cylindrical, or prismatic case, and then sealing the case.

The pack tray 120 is configured to accommodate one or at least two batteries 110. To this end, the pack tray 120 may have an internal space accommodating one or at least two batteries 110 and an opening communicating with this internal space. For example, the pack tray 120 is configured in a box shape with an opening at the top and may accommodate a plurality of batteries 110 in the internal space thereof.

In an embodiment, the pack tray 110 may include a wall 122 forming the internal space. On one surface of the wall 122 adjacent to the internal space, at least one gas inlet 124 through which gas generated from the battery 110 is introduced may be provided. In addition, inside the wall 122, at least one gas passage communicating with the at least one gas inlet 124 may be provided. In this case, on the outer surface of the pack tray 120, a gas outlet 126 for discharging the gas moved through the gas passage to the outside may be provided.

In addition, the pack tray 120 may further include a cross beam 128 that divides the internal space into a plurality of mutually independent receiving rooms. In this case, at least one battery 110 may be accommodated in each receiving room. In addition, the gas inlet 124 may be provided in each receiving room.

In an embodiment, the pack tray 120 may further accommodate various electrical components (not shown) that control the charge/discharge operation of the battery 110 accommodated in the internal space or monitor the state of charge (SOC), the state of health (SOH), and the like.

The pack lid 130 is configured to be coupled to the above-described pack tray 120 and cover the top opening of the pack tray 120. This pack lid 130 may be coupled to the pack tray 120 using a fastening member such as a screw or various methods such as welding or adhesion.

The heat dissipation structure 140 is disposed between the plurality of batteries 110 and the pack lid 130 and is configured to dissipate heat generated from the plurality of batteries 110. To this end, the heat dissipation structure 140 may be made of a metal material having high thermal conductivity. In particular, the heat dissipation structure 140 may be made of a material having higher thermal conductivity than that of the pack lid 130. For example, the pack lid 130 may be made of stainless steel, and the heat dissipation structure 140 may be made of a material including aluminum.

In addition, the heat dissipation structure 140 may be configured in thermal contact with the battery 110 and the pack lid 130, respectively, to rapidly disperse and release heat generated from the battery 110 throughout the pack lid 130.

In an embodiment, the heat dissipation structure 140 may be configured in the form of a plate or sheet to be coupled to the bottom surface of the pack lid 130. In this case, the pack lid 130 may have a multi-layer structure in which a heat dissipation structure is integrally coupled to the bottom surface thereof.

In another embodiment, the heat dissipation structure 140 may be configured as a geometric three-dimensional structure.

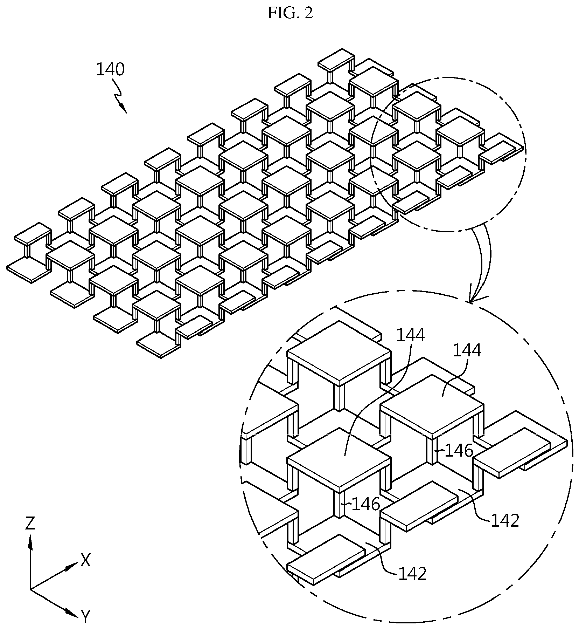

In FIG. 2, the heat dissipation structure 140 of the battery pack shown in FIG. 1 is shown.

As shown in FIG. 2, the heat dissipation structure 140 may include a first contact portion 142 and a second contact portion 144.

The first contact portion 142 may be configured to be in thermal contact with at least one of the plurality of batteries 110 accommodated in the pack tray 120. To this end, the first contact portion 142 may have a plate structure.

The second contact portion 144 may be spaced apart from the first contact portion 142 at a predetermined distance to have a step difference from the first contact portion 142 and may be configured to be in thermal contact with the pack lid 130. To this end, the second contact portion 144 may have a plate structure.

In addition, the heat dissipation structure 140 may further include at least one connection leg 146. The connection leg 146 may be configured to have one end connected to the first contact portion 142 and the other end connected to the second contact portion 144 to maintain a gap between the first contact portion 142 and the second contact portion 144.

In an embodiment, the heat dissipation structure 140 may include the above-described first contact portion 142 and second contact portion 144 in plurality, respectively.

For example, the plurality of first contact portions 142 may be spaced apart from each other at intervals and each one may be configured to be in thermal contact with at least one of the plurality of batteries 110. In this case, the plurality of first contact portions 142 may be disposed in a lattice shape at intervals from each other on a virtual first plane.

In addition, the plurality of second contact portions 144 may be spaced apart from each other at intervals and each one may be configured to be in thermal contact with different portions of the pack lid 130. In this case, the plurality of second contact portions 144 may be disposed in a lattice shape at intervals from each other on a virtual second plane parallel to the first plane.

The plurality of first contact portions 142 and the plurality of second contact portions 144 may be disposed alternately based on a first direction (e.g., X-axis direction or Y-axis direction) parallel to the first plane or the second plane.

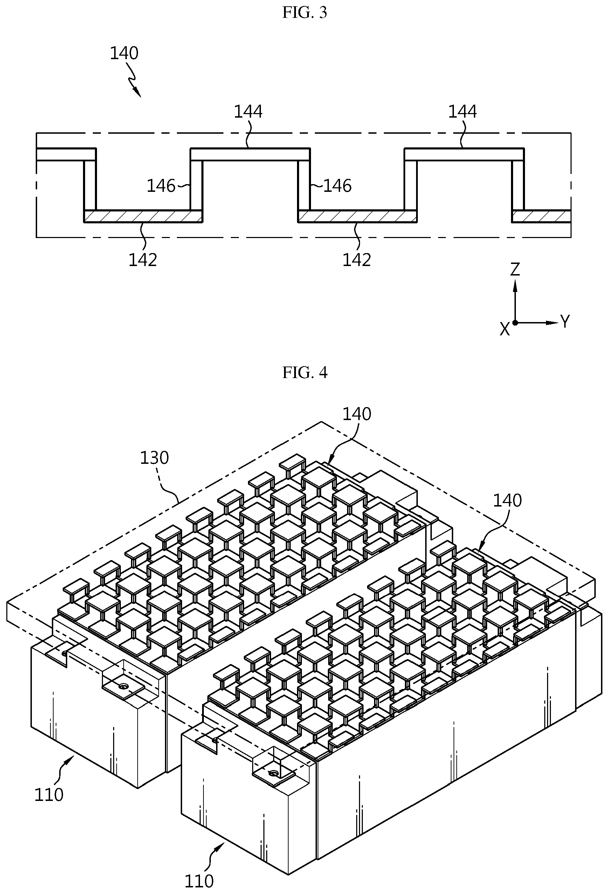

In FIG. 3, a cross-sectional view of the heat dissipation structure 140 shown in FIG. 2 is shown.

As shown in FIG. 3, the heat dissipation structure 140 may include a plurality of first contact portions 142 and a plurality of second contact portions 144.

The plurality of first contact portions 142 may be disposed at positions spaced apart from each other on a virtual first plane P1. In this case, the first plane P1 may be a plane corresponding to a contact surface of the battery 110 with which each first contact portion 142 is in contact.

The plurality of second contact portions 144 may be disposed at positions spaced apart from each other on a virtual second plane P2 parallel to the first plane P1. In this case, the second plane P2 may be a plane corresponding to the bottom surface of the pack lid 130 with which each second contact portion 144 is in contact.

The plurality of first contact portions 142 and the plurality of second contact portions 144 may be disposed alternately based on a first direction (e.g., Y-axis direction) parallel to the first plane P1 or the second plane P2.

In addition, the heat dissipation structure 140 may include a plurality of connection legs 146 that integrally connect the plurality of first contact portions 142 and the plurality of second contact portions 144.

In FIG. 4, a heat dissipation structure of the battery pack shown in FIG. 1 is shown.

As shown in FIG. 4, the heat dissipation structure 140 may be disposed between the top surface of the battery 110 accommodated in the pack tray 120 and the pack lid 130 covering the opening of the pack tray 120.

This heat dissipation structure 140 may prevent heat from accumulating in a portion of the pack lid 130 by quickly dispersing the heat generated from the batteries accommodated in the pack tray 120 throughout the pack lid 130 and cooling. In addition, the heat generated from the battery 110 may be cooled while being transferred through the first contact portion 142, the connection leg 146, and the second contact portion 144 of the heat dissipation structure 140, thereby improving cooling performance of the battery pack 100. As a result, thermal runaway of the battery or chain thermal runaway between batteries may be suppressed or delayed, and ignition of the battery pack may be prevented.

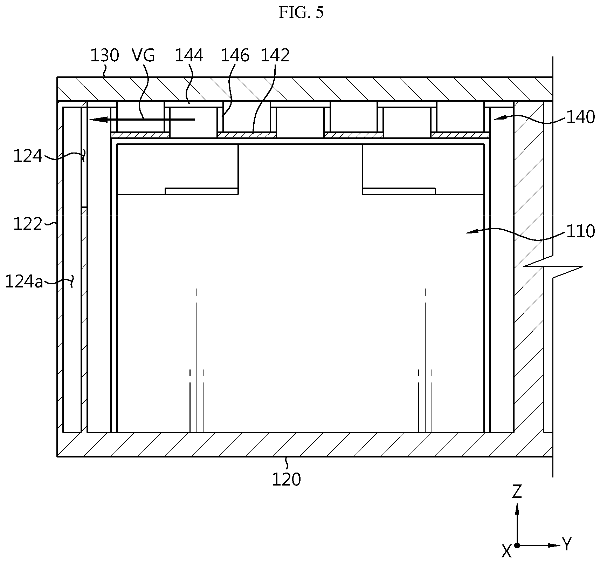

In FIG. 5, a cross-sectional view taken along line S1-S1' in FIG. 1 is shown.

As shown in FIG. 5, the heat dissipation structure 140 may be disposed between the top surface of the battery 110 accommodated in the pack tray 120 and the pack lid 130 covering the opening of the pack tray 120 to provide an emission path for venting gas VG generated in the battery 110. That is, the venting gas VG generated in the battery 110 may be discharged by moving through the space provided between the first contact portion 142 and the second contact portion 144 of the heat dissipation structure 140.

To this end, the wall 122 of the pack tray 120 may have at least one gas inlet 124 provided in a portion of one surface of the wall 122 adjacent to the internal space of the pack tray 120, which is located between the first contact portion 142 and the second contact portion 144 of the heat dissipation structure 140.

That is, the gas inlet 124 may be configured to communicate with the space between the first contact portion 142 and the second contact portion 144 of the heat dissipation structure 140. Therefore, the venting gas VG generated in the battery 110 may move through the space between the first contact portion 142 and the second contact portion 144 of the heat dissipation structure 140 and flow into the gas inlet 124 of the wall 122.

In addition, the wall 122 may have a gas passage 124a provided therein and communicating with the gas inlet 124. The venting gas VG introduced through the gas inlet 124 may be moved through the gas passage 124a and discharged to the outside through the gas outlet 126 provided on the outer surface of the pack tray 120.

In this way, the heat dissipation structure 140 with a geometric three-dimensional structure may be disposed between the battery 110 and the pack lid 130 to provide a gas emission path, thereby facilitating the design of an emission path for gas or flame generated from the battery pack.

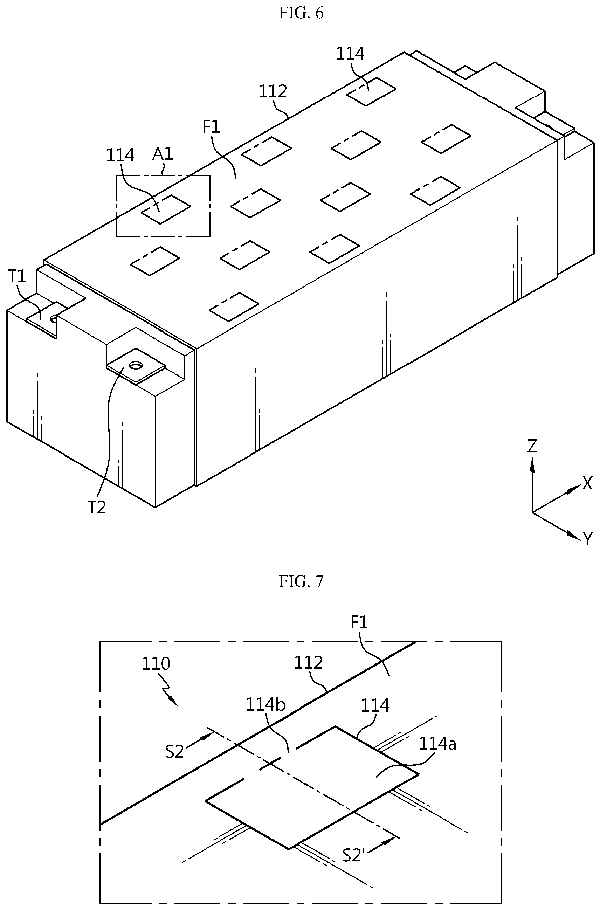

In FIG. 6, a battery 110 included in a battery pack according to an embodiment of the present disclosure is shown.

As shown in FIG. 6, the battery 110 may have a contact surface F1 in contact with at least one of the plurality of first contact portions 142 of the heat dissipation structure 140 described above. In addition, a venting portion 114 for discharging gas may be provided in a part of the contact surface F1 other than the part in contact with the first contact portion 142.

This battery 110 may be implemented as a battery module including a plurality of battery cells that are the basic unit of charge/discharge and a battery case 112 that accommodates the plurality of battery cells.

In this case, the battery case 112 has a contact surface F1 provided with the venting portion 114 and may be configured to accommodate the plurality of battery cells therein. On the outer surface of this battery case 112, terminals T1, T2 electrically connected to the battery cells accommodated in the internal space may be disposed.

In FIG. 7, region A1 in FIG. 6 is shown in an enlarged view.

As shown in FIG. 7, at least one venting portion 114 may be provided on the contact surface F1 of the battery case 112. The venting portion 114 may have a lid portion 114a and at least one support portion 114b.

The lid portion 114a may be configured to be separated from the remaining part of the contact surface F1 when the internal pressure of the battery 110 increases above a predetermined pressure. When the lid portion 114a is separated from the contact surface F1, an opening communicating with the internal space of the battery case 112 may be formed in the contact surface F1.

The support portion 114b may be configured such that one end thereof is integrally connected to other part of the contact surface F1 excluding the lid portion 114a and the other end thereof is integrally connected to the lid portion 114a. This support portion 114b may support the lid portion 114a so that the lid portion 114a separated from the contact surface F1 maintains a certain position.

This venting portion 114 may be provided by forming a notch or cut line on the contact surface F1 of the battery 110.

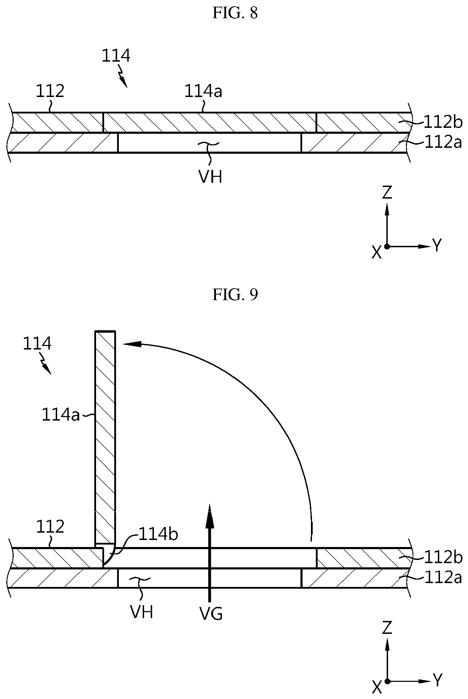

In FIG. 8, a cross-sectional view taken along line S2-S2' in FIG. 7 is shown.

As shown in FIG. 8, the battery case 112 may have a multi-layer structure. That is, the battery case 112 may include a case frame 112a and a vent hole cover 112b.

The case frame 112a constitutes the main body of the battery case 112 and may have a vent hole VH provided on one surface corresponding to the contact surface F1.

The vent hole cover 112b may be attached to the outer surface of the case frame 112a and configured to cover the vent hole VH. In this case, the above-described venting portion 114 may be provided in the vent hole cover 112b.

For example, in a normal state where gas is not generated inside the battery 110, the lid portion 114a of the venting portion 114 covers and closes the opening of the vent hole VH of the case frame 112a. To this end, the lid portion 114a of the venting portion 114 may have an area equal to or larger than the opening area of the vent hole VH.

FIG. 9 shows an open state of the venting portion 114 shown in FIG. 8.

As shown in FIG. 9, when gas is generated inside the battery 110, the lid portion 114a of the venting portion 114 may be separated from the remaining part of the vent hole cover 112b by the pressure of the gas to open the vent hole VH of the case frame 112a.

In this case, the support portion 114b of the venting portion 114 may support the lid portion 114a separated from the vent hole cover 112b to maintain the lid portion 114a in a certain position.

For reference, if the lid portion 114a is completely separated from the vent hole cover 112b by the pressure of the venting gas, fragments of the separated lid portion 114a may cause various problems inside the battery pack. To prevent this problem, the support portion 114b may support the lid portion 114a so that the lid portion 114a is not completely separated from the vent hole cover 112b.

As such, the vent hole cover 112b having the venting portion 114 may cover the vent hole VH of the case frame 112a, thereby quickly discharging the gas generated inside the battery 110 to the outside of the battery 110 while preventing foreign substances from penetrating into the battery module. As a result, heat energy accumulated inside the battery 110 may be minimized to delay heat propagation time and to prevent chain thermal runaway or ignition of other batteries accommodated in the battery pack 100.

In an embodiment, the vent hole cover 112b may be configured in the form of a sheet of flexible material, to surround at least two of the plurality of surfaces of the case frame 112a and to be attached to the case frame 112a. As a result, while reducing the weight of the battery 110 and simplifying the manufacturing process, it is possible to prevent the entire vent hole cover 112b from being separated from the case frame 112a by the gas pressure of the battery 110.

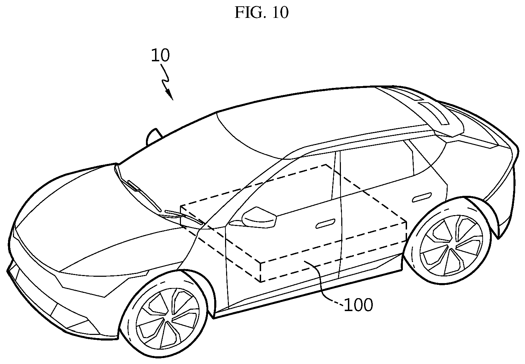

In FIG. 10, a vehicle 10 according to an embodiment of the present disclosure is shown.

As shown in FIG. 10, a vehicle 10 according to an embodiment of the present disclosure may include a battery pack 100 according to the various embodiments described above. In this case, the battery pack 100 may provide electrical energy required for various operations of the vehicle 10.

For reference, it is a matter of course that the battery pack 100 according to the present disclosure may be applied to various electrical devices or electrical systems in addition to a vehicle, and may also be applied to an energy storage system (ESS).

As described above, according to the present disclosure, a heat dissipation structure is located between a plurality of batteries accommodated in a pack tray and a pack lid to dissipate heat generated from the plurality of batteries, thereby preventing overheating or thermal runaway of the batteries accommodated in the battery pack, suppressing or delaying chain thermal runaway between the batteries or ignition of the battery pack, and improving safety of the battery pack.

In addition, the heat dissipation structure includes a first contact portion that is in contact with at least one of the plurality of batteries and a second contact portion that is spaced apart from the first contact portion at a predetermined distance and is in contact with the pack lid, which has a relatively larger surface area than a simple plate structure, thereby increasing the cooling speed of the battery and improving the heat dissipation efficiency.

In addition, since the heat dissipation structure is configured as a geometric three-dimensional structure that provides a gas emission space between the battery and the pack lid, it is possible to facilitate the design of an emission path for gas or flame generated from the battery.

Furthermore, it is a matter of course that embodiments according to the present disclosure may solve various other technical problems in addition to those mentioned in this specification in related technical fields as well as in the relevant technical field.

The present disclosure has been described hereinabove with reference to specific embodiments. However, it will be clearly understood to those skilled in the art that various modified embodiments may be implemented within the technical scope of the present disclosure. Therefore, the embodiments disclosed above should be considered from an illustrative perspective rather than a limiting perspective.

## Claims

1. A battery pack (100) comprising:
a plurality of batteries (110);
a pack tray (120) having an internal space accommodating the plurality of batteries (110) and an opening communicating with the internal space;
a pack lid (130) configured to be coupled to the pack tray (120) to cover the opening; and
a heat dissipation structure (140) disposed between the plurality of batteries (110) and the pack lid (130),
wherein the heat dissipation structure (140) comprises:
a first contact portion (142) in thermal contact with at least one of the plurality of batteries (110); and
a second contact portion (144) that is spaced apart from the first contact portion (142) at a predetermined distance and is in thermal contact with the pack lid (130),
**characterised in that** the heat dissipation structure (140) further comprises at least one connection leg (146) having one end connected to the first contact portion (142) and the other end connected to the second contact portion (144) to maintain a gap between the first contact portion (142) and the second contact portion (144).

2. The battery pack according to claim 1,
wherein the heat dissipation structure (140) comprises the first contact portion (142) and the second contact portion (144) in plurality, respectively.

3. The battery pack according to claim 2,
wherein the plurality of first contact portions (142) of the heat dissipation structure are spaced apart from each other at intervals and each one is configured to be in thermal contact with at least one of the plurality of batteries (110).

4. The battery pack according to claim 2,
wherein the plurality of second contact portions (142) of the heat dissipation structure are spaced apart from each other at intervals and each one is configured to be in thermal contact with different portions of the pack lid (130).

5. The battery pack according to claim 2,
wherein the plurality of first contact portions (142) of the heat dissipation structure are disposed in a lattice shape at intervals from each other on a first plane, and
the plurality of second contact portions (144) of the heat dissipation structure are disposed in a lattice shape at intervals from each other on a second plane parallel to the first plane.

6. The battery pack according to claim 5,
wherein the plurality of first contact portions (142) and the plurality of second contact portions (144) are disposed alternately based on a first direction parallel to the first plane or the second plane.

7. The battery pack according to claim 2,
wherein the heat dissipation structure (140) comprises a plurality of connection legs (146) that integrally connect the plurality of first contact portions (142) and the plurality of second contact portions (144).

8. The battery pack according to claim 2,
wherein each of the plurality of batteries (110) has a contact surface contacting at least one of the plurality of first contact portions (142) of the heat dissipation structure, and a venting portion (114) for discharging gas is provided on a part of the contact surface other than the part in contact with the at least one first contact portion (142).

9. The battery pack according to claim 8,
wherein each of the plurality of batteries (110) comprises:
a plurality of battery cells that can be charged and discharged; and
a battery case (112) having the contact surface provided with the venting portion (114) and accommodating the plurality of battery cells therein.

10. The battery pack according to claim 1,
wherein the heat dissipation structure (140) is made of a material having higher thermal conductivity than that of the pack lid (130).

11. The battery pack according to claim 1,
wherein the pack tray (120) comprises a wall (122) forming the internal space,
wherein the wall (122) comprises:
at least one gas inlet (124) communicating with the space between the first contact portion (142) and the second contact portion (144) and configured such that gas generated from a battery accommodated in the internal space is introduced; and
at least one gas passage (124a) communicating with the at least one gas inlet (124).

12. A vehicle (10) comprising a battery pack (100) according to any one of claims 1 to 11.

## Patentansprüche

1. Ein Batteriepack (100), umfassend:
• eine Vielzahl von Batterien (110);
• eine Packungswanne (120) mit einem Innenraum, der die Vielzahl von Batterien (110) aufnimmt, und einer Öffnung, die mit dem Innenraum in Verbindung steht;
• einen Packungsdeckel (130), der so konfiguriert ist, dass er mit der Packungswanne (120) gekoppelt wird, um die Öffnung abzudecken; und
• eine Wärmeableitungsstruktur (140), die zwischen der Vielzahl von Batterien (110) und dem Packungsdeckel (130) angeordnet ist,
wobei die Wärmeableitungsstruktur (140) umfasst:
• einen ersten Kontaktabschnitt (142) in thermischem Kontakt mit mindestens einer der Vielzahl von Batterien (110); und
• einen zweiten Kontaktabschnitt (144), der von dem ersten Kontaktabschnitt (142) in einem vorbestimmten Abstand beabstandet ist und in thermischem Kontakt mit dem Packungsdeckel (130) steht,

2. Batteriepack nach Anspruch 1,
wobei die Wärmeableitungsstruktur (140) den ersten Kontaktabschnitt (142) und den zweiten Kontaktabschnitt (144) jeweils in einer Vielzahl umfasst.

3. Batteriepack nach Anspruch 2,
wobei die Vielzahl von ersten Kontaktabschnitten (142) der Wärmeableitungsstruktur in Abständen voneinander beabstandet sind und jeder einzelne so konfiguriert ist, dass er in thermischem Kontakt mit mindestens einer der Vielzahl von Batterien (110) steht.

4. Batteriepack nach Anspruch 2,
wobei die Vielzahl von zweiten Kontaktabschnitten (142) der Wärmeableitungsstruktur in Abständen voneinander beabstandet sind und jeder einzelne so konfiguriert ist, dass er in thermischem Kontakt mit verschiedenen Abschnitten des Packungsdeckels (130) steht.

5. Batteriepack nach Anspruch 2,
wobei:
• die Vielzahl von ersten Kontaktabschnitten (142) der Wärmeableitungsstruktur in einer Gitterform in Abständen voneinander auf einer ersten Ebene angeordnet sind, und
• die Vielzahl von zweiten Kontaktabschnitten (144) der Wärmeableitungsstruktur in einer Gitterform in Abständen voneinander auf einer zweiten Ebene parallel zur ersten Ebene angeordnet sind.

6. Batteriepack nach Anspruch 5,
wobei die Vielzahl von ersten Kontaktabschnitten (142) und die Vielzahl von zweiten Kontaktabschnitten (144) abwechselnd basierend auf einer ersten Richtung parallel zur ersten Ebene oder zur zweiten Ebene angeordnet sind.

7. Batteriepack nach Anspruch 2,
wobei die Wärmeableitungsstruktur (140) eine Vielzahl von Verbindungsschenkeln (146) umfasst, die die Vielzahl von ersten Kontaktabschnitten (142) und die Vielzahl von zweiten Kontaktabschnitten (144) einstückig verbinden.

8. Batteriepack nach Anspruch 2,
wobei jede der Vielzahl von Batterien (110) eine Kontaktfläche aufweist, die mindestens einen der Vielzahl von ersten Kontaktabschnitten (142) der Wärmeableitungsstruktur kontaktiert, und ein Entlüftungsabschnitt (114) zum Abführen von Gas auf einem anderen Teil der Kontaktfläche als dem Teil, der mit dem mindestens einen ersten Kontaktabschnitt (142) in Kontakt steht, vorgesehen ist.

9. Batteriepack nach Anspruch 8,
wobei jede der Vielzahl von Batterien (110) umfasst:
• eine Vielzahl von Batteriezellen, die geladen und entladen werden können; und
• ein Batteriegehäuse (112), das die mit dem Entlüftungsabschnitt (114) versehene Kontaktfläche aufweist und die Vielzahl von Batteriezellen darin aufnimmt.

10. Batteriepack nach Anspruch 1,
wobei die Wärmeableitungsstruktur (140) aus einem Material hergestellt ist, das eine höhere Wärmeleitfähigkeit als diejenige des Packungsdeckels (130) aufweist.

11. Batteriepack nach Anspruch 1,
wobei die Packungswanne (120) eine Wand (122) umfasst, die den Innenraum bildet, wobei die Wand (122) umfasst:
• mindestens einen Gaseinlass (124), der mit dem Raum zwischen dem ersten Kontaktabschnitt (142) und dem zweiten Kontaktabschnitt (144) in Verbindung steht und so konfiguriert ist, dass aus einer im Innenraum aufgenommenen Batterie erzeugtes Gas eingeleitet wird; und
• mindestens einen Gaskanal (124a), der mit dem mindestens einen Gaseinlass (124) in Verbindung steht.

12. Fahrzeug (10), umfassend ein Batteriepack (100) nach einem der Ansprüche 1 bis 11.

## Revendications

1. Bloc-batterie (100) comprenant :
• une pluralité de batteries (110) ;
• un plateau de bloc-batterie (120) ayant un espace interne logeant la pluralité de batteries (110) et une ouverture communiquant avec l'espace interne ;
• un couvercle de bloc-batterie (130) configuré pour être couplé au plateau de bloc-batterie (120) pour recouvrir l'ouverture ; et
• une structure de dissipation thermique (140) disposée entre la pluralité de batteries (110) et le couvercle de bloc-batterie (130),
dans lequel la structure de dissipation thermique (140) comprend :
• une première partie de contact (142) en contact thermique avec au moins l'une de la pluralité de batteries (110) ; et
• une deuxième partie de contact (144) qui est espacée de la première partie de contact (142) d'une distance prédéterminée et est en contact thermique avec le couvercle de bloc-batterie (130),
**caractérisé en ce que** la structure de dissipation thermique (140) comprend en outre au moins une patte de liaison (146) ayant une extrémité connectée à la première partie de contact (142) et l'autre extrémité connectée à la deuxième partie de contact (144) pour maintenir un espace entre la première partie de contact (142) et la deuxième partie de contact (144).

2. Bloc-batterie selon la revendication 1,
dans lequel la structure de dissipation thermique (140) comprend respectivement la première partie de contact (142) et la deuxième partie de contact (144) en pluralité.

3. Bloc-batterie selon la revendication 2,
dans lequel la pluralité de premières parties de contact (142) de la structure de dissipation thermique sont espacées les unes des autres à intervalles et chacune d'elles est configurée pour être en contact thermique avec au moins l'une de la pluralité de batteries (110).

4. Bloc-batterie selon la revendication 2,
dans lequel la pluralité de deuxièmes parties de contact (142) de la structure de dissipation thermique sont espacées les unes des autres à intervalles et chacune d'elles est configurée pour être en contact thermique avec différentes parties du couvercle de bloc-batterie (130).

5. Bloc-batterie selon la revendication 2,
dans lequel la pluralité de premières parties de contact (142) de la structure de dissipation thermique sont disposées sous forme de grille à intervalles les unes des autres sur un premier plan, et
la pluralité de deuxièmes parties de contact (144) de la structure de dissipation thermique sont disposées sous forme de grille à intervalles les unes des autres sur un deuxième plan parallèle au premier plan.

6. Bloc-batterie selon la revendication 5,
dans lequel la pluralité de premières parties de contact (142) et la pluralité de deuxièmes parties de contact (144) sont disposées en alternance sur la base d'une première direction parallèle au premier plan ou au deuxième plan.

7. Bloc-batterie selon la revendication 2,
dans lequel la structure de dissipation thermique (140) comprend une pluralité de pattes de liaison (146) qui relient de manière solidaire la pluralité de premières parties de contact (142) et la pluralité de deuxièmes parties de contact (144).

8. Bloc-batterie selon la revendication 2,
dans lequel chacune de la pluralité de batteries (110) a une surface de contact en contact avec au moins l'une de la pluralité de premières parties de contact (142) de la structure de dissipation thermique, et une partie d'évent (114) pour évacuer du gaz est prévue sur une partie de la surface de contact autre que la partie en contact avec l'au moins une première partie de contact (142).

9. Bloc-batterie selon la revendication 8,
dans lequel chacune de la pluralité de batteries (110) comprend :
• une pluralité d'éléments de batterie qui peuvent être chargés et déchargés ; et
• un boîtier de batterie (112) ayant la surface de contact munie de la partie d'évent (114) et y logeant la pluralité d'éléments de batterie.

10. Bloc-batterie selon la revendication 1,
dans lequel la structure de dissipation thermique (140) est faite d'un matériau ayant une conductivité thermique supérieure à celle du couvercle de bloc-batterie (130).

11. Bloc-batterie selon la revendication 1,
dans lequel le plateau de bloc-batterie (120) comprend une paroi (122) formant l'espace interne,
dans lequel la paroi (122) comprend :
• au moins une entrée de gaz (124) communiquant avec l'espace entre la première partie de contact (142) et la deuxième partie de contact (144) et configurée de telle sorte que du gaz généré par une batterie logée dans l'espace interne y soit introduit ; et
• au moins un passage de gaz (124a) communiquant avec l'au moins une entrée de gaz (124).

12. Véhicule (10) comprenant un bloc-batterie (100) selon l'une quelconque des revendications 1 à 11.
